# EUROPEAN PATENT APPLICATION

(11) **EP 3 589 037 A1**
(43) Date of publication of application: **01.01.2020**
(21) Application number: 19182514.0
(22) Date of filing: 26.06.2019
(51) Int. Cl.: H04W 60/00, H04W 48/16, H04W 48/18, H04W 88/02

(54) **METHOD AND USER EQUIPMENT FOR ACCESSING NETWORK SLICES WHICH ARE NOT MUTUALLY EXCLUSIVE**

(30) Priority: 29.06.2018 US 201862691719 P; 04.10.2018 US 201862740998 P; 17.05.2019 TW 108117123
(71) Applicant: Industrial Technology Research Institute, Hsinchu 31040 (TW)
(72) Inventor: LAI, Chia-Lin, Tainan City 701 (TW); TAN, Tze-Jie, Hsinchu City 300 (TW)
(74) Representative: Becker Kurig Straus

(57) **Abstract**

A method for accessing a network slice and a user equipment using the same are provided. The method for accessing a network slice includes: transmitting a request message to a 5G communication network; receiving, from the 5G communication network, allowed network slice selection assistance information in response to the request message; obtaining mutually exclusive network slices information according to the allowed network slice selection assistance information; and establishing multiple sessions respectively corresponding to multiple network slices according to the mutually exclusive network slices information.

## Description

### BACKGROUND

### [Technical Field]

The disclosure relates to a method for accessing a network slice and a user equipment using the same.

### [Description of Related Art]

The fifth generation (5G) communication network supports network slicing techniques to provide different networking services for the user equipment (UE). A network slice (i.e., a network slice instance (NSI)) is a logical network that provides specific network capabilities and network characteristics. The network slice may be configured to have a control plane (CP) function and a user plane (UP) function. The user equipment may simultaneously access multiple network slices in a 5G communication network through the next generation radio access network (NG-RAN) to thereby use multiple services respectively provided by the multiple network slices. However, according to the contents or limitations of the service, some network slices cannot be accessed simultaneously. These network slices that cannot be accessed simultaneously are referred to as mutually exclusive network slices (MEANS). When the network slices to be accessed by the user equipment are mutually exclusive, the access request of the user equipment will be rejected by the 5G core network. The user equipment then needs to re-issue the request message to the 5G core network to request to use network slices which are not mutually exclusive from the 5G core network. As a result, additional signaling overhead may be incurred.

### SUMMARY

The disclosure provides a method for accessing a network slice and a user equipment using the same.

A method for accessing a network slice of the disclosure is adapted for a user equipment supporting a 5G communication network. The method includes the following steps. A request message is transmitted to the 5G communication network. Allowed network slice selection assistance information (allowed NSSAI) is received from the 5G communication network in response to the request message. Mutually exclusive network slices information is obtained according to the allowed NSSAI. Multiple sessions respectively corresponding to multiple network slices are established according to the mutually exclusive network slices information.

In an embodiment of the disclosure, the mutually exclusive network slices information indicates that a first network slice and a second network slice are mutually exclusive.

In an embodiment of the disclosure, the allowed NSSAI is associated with a first single network slice selection assistance information (S-NSSAI) subset including a first S-NSSAI and a second S-NSSAI subset including a second S-NSSAI, wherein the first S-NSSAI corresponds to a first network slice, the second S-NSSAI corresponds to a second network slice, and the first S-NSSAI subset is different from the second S-NSSAI subset.

In an embodiment of the disclosure, the step of obtaining the mutually exclusive network slices information according to the allowed NSSAI includes the following step. The first network slice and the second network slice are determined to be mutually exclusive based on the first S-NSSAI and the second S-NSSAI not being in an intersection between the first S-NSSAI subset and the second S-NSSAI subset.

In an embodiment of the disclosure, the first S-NSSAI subset further includes allowed single network slice selection assistance information (allowed S-NSSAI) of each of all allowed network slices that are not mutually exclusive with the first network slice, and the second S-NSSAI subset further includes allowed S-NSSAI of each of all allowed network slices that are not mutually exclusive with the second network slice.

In an embodiment of the disclosure, the multiple network slices are not mutually exclusive. In an embodiment of the disclosure, the multiple network slices respectively correspond to different access and mobility management functions (AMFs).

In an embodiment of the disclosure, the multiple network slices respectively correspond to different public land mobile networks (PLMNs).

In an embodiment of the disclosure, the request message is associated with pre-stored NSSAI stored in the user equipment, and the pre-stored NSSAI is configured by a public land mobile network.

In an embodiment of the disclosure, the multiple network slices include a subset of multiple network slices indicated by the allowed NSSAI.

In an embodiment of the disclosure, the multiple network slices include a first network slice, and the first network slice is communicatively connected to a first access and mobility management function and a second access and mobility management function, wherein a session between the user equipment and the first network slice remains uninterrupted when an access and mobility management function accessed by the user equipment is switched from the first access and mobility management function to the second access and mobility management function.

A user equipment of the disclosure supports a 5G communication network. The user equipment includes a transceiver and a processor. The processor is coupled to the transceiver and is configured to at least perform the following operations. A request message is transmitted by the transceiver to the 5G communication network. Allowed NSSAI is received by the transceiver from the 5G communication network in response to the request message. Mutually exclusive network slices information is obtained according to the allowed NSSAI. Multiple sessions respectively corresponding to multiple network slices are established according to the mutually exclusive network slices information.

Based on the above, the user equipment of the disclosure may receive the allowed NSSAI associated with multiple network slice subsets from the AMF in the 5G core network to determine whether the network slices are mutually exclusive. Afterwards, the user equipment will not transmit a packet data unit (PDU) session establishment request to request to use the mutually exclusive network slices, and the AMF in the 5G core network will not need to respond to the user equipment through a message to notify the user equipment that the requested network slices are mutually exclusive. Accordingly, the signaling overhead can be significantly reduced.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1A is a schematic view showing a first deployment scenario of an AMF according to an embodiment of the disclosure.
FIG. 1B is a schematic view showing a second deployment scenario of the AMF according to an embodiment of the disclosure.
FIG. 2A is a schematic view showing the AMF managing mutually exclusive network slices according to an embodiment of the disclosure.
FIG. 2B is a schematic view showing the AMF managing network slices which are not mutually exclusive according to an embodiment of the disclosure.
FIG. 3 is a schematic view showing switching of network slice subsets used by a user equipment according to an embodiment of the disclosure.
FIG. 4 is a schematic view showing a registration procedure of the user equipment according to an embodiment of the disclosure.
FIG. 5 is a schematic view showing acquisition of mutually exclusive network slices information by the user equipment according to an embodiment of the disclosure.
FIG. 6 is a schematic view showing a PDU session establishment procedure according to an embodiment of the disclosure.
FIG. 7 is a flowchart showing a method for accessing a network slice according to an embodiment of the disclosure.
FIG. 8 is a functional block diagram showing the user equipment as shown in FIG. 1A to FIG. 6 according to an embodiment of the disclosure.

### DESCRIPTION OF THE EMBODIMENTS

To provide a further understanding of the content of the disclosure, embodiments will be provided below as examples for implementing the disclosure accordingly. In addition, wherever possible, elements, components, and steps labeled with the same numerals in the drawings and embodiments represent the same or similar components.

In 3GPP TS 23.501 and/or 3GPP TS 23.502, a network slice includes a required network function instance (required NFI) and related resources. A user equipment may request a network slice from a 5G core network during the registration procedure. Afterwards, the user equipment may request a network slice from the 5G core network through a request message including the network slice selection assistance information (NSSAI). The NSSAI may include up to eight S-NSSAIs, and each S-NSSAI corresponds to a network slice in a one-to-one manner. In other words, by transmitting one single NSSAI to the 5G core network, the user equipment may request up to eight network slices from the 5G core network at the same time. Each S-NSSAI may include information such as a service/slice type (SST) or a service differentiator (SD), but the disclosure is not limited thereto. The SST is used to indicate the type of the network slice, including, for example, enhanced mobile broadband (eMBB), ultra-reliable and low latency communication (URLLC), and massive Internet of things (MIoT). The SD is used to distinguish network slices of the same SST, but it is dedicated to different user equipment groups from a third party.

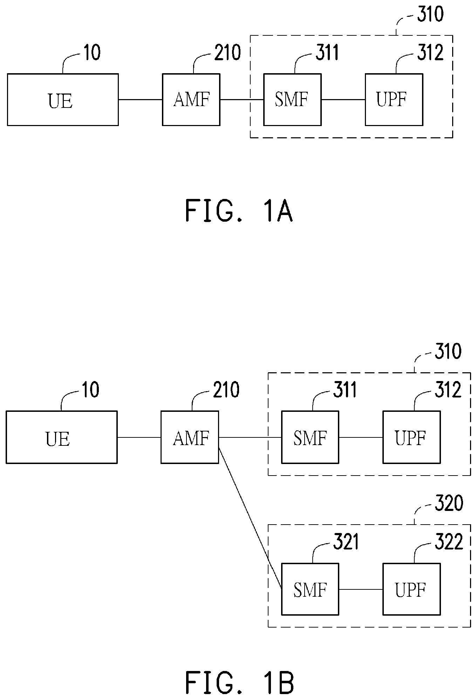

FIG. 1A is a schematic view showing a first deployment scenario of an AMF 210 according to an embodiment of the disclosure. In an embodiment, the technical terms used herein and the concepts corresponding to the technical terms are consistent or similar to those in 3GPP TS 23.501 and/or 3GPP TS 23.502, and the architecture of the 5G communication network is, for example, the 5G communication network architecture in 3GPP TS 23.501, but the disclosure is not limited thereto. As shown in FIG. 1A, a user equipment 10 may request a network slice 310 corresponding to an S-NSSAI from the AMF 210 in the 5G core network through a request message including the S-NSSAI. The network slice 310 includes a session management function (SMF) 311 and a user plane function (UPF) 312 managed by the SMF 311, but the disclosure is not limited thereto. In the present embodiment, the AMF 210 is only used to manage one single network slice 310.

On the other hand, FIG. 1B is a schematic view showing a second deployment scenario of the AMF 210 according to an embodiment of the disclosure. As shown in FIG. 1B, the user equipment 10 may request the network slice 310 corresponding to an S-NSSAI from the AMF 210 in the 5G core network through a request message including the S-NSSAI. Alternatively, the user equipment 10 may request a network slice 320 corresponding to another S-NSSAI from the AMF 210 in the 5G core network through a request message including another S-NSSAI. The network slice 320 includes an SMF 321 and a UPF 322 managed by the SMF 321. In the present embodiment, the AMF 210 is shared by the network slice 310 and the network slice 320. In other words, the AMF 210 may manage multiple network slices at the same time.

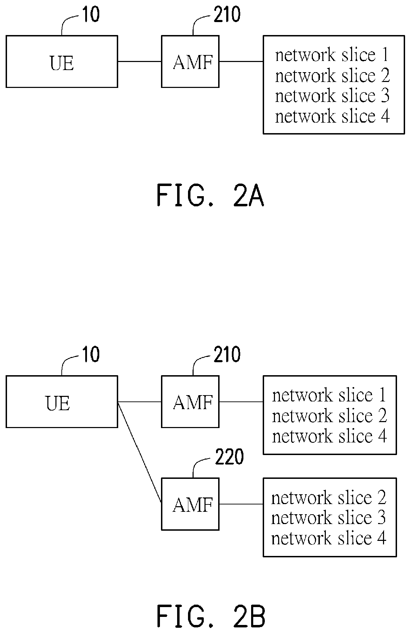

When the AMF (e.g., the AMF 210 as shown in FIG. 1B) is shared by multiple network slices, the AMF may be configured to manage mutually exclusive network slices. FIG. 2A is a schematic view showing the AMF 210 managing mutually exclusive network slices according to an embodiment of the disclosure. As shown in FIG. 2A, the serving AMF (i.e., the AMF 210 which is serving the user equipment) of the user equipment 10 may simultaneously manage a network slice 1, a network slice 2, a network slice 3, and a network slice 4. In an embodiment, the network slice 1 and the network slice 3 are mutually exclusive. That the network slice 1 and the network slice 3 are mutually exclusive means that the user equipment 10 cannot use the network slice 1 and the network slice 3 at the same time. On the other hand, the AMF may be configured to manage network slices which are not mutually exclusive. FIG. 2B is a schematic view showing the AMF 210 managing network slices which are not mutually exclusive according to an embodiment of the disclosure. As shown in FIG. 2B, the serving AMF 210 of the user equipment 10 may simultaneously manage the network slice 1, the network slice 2, and the network slice 4 which are not mutually exclusive. The network slice 3, which is mutually exclusive with the network slice 1, is managed by an AMF 220 different from the AMF 210.

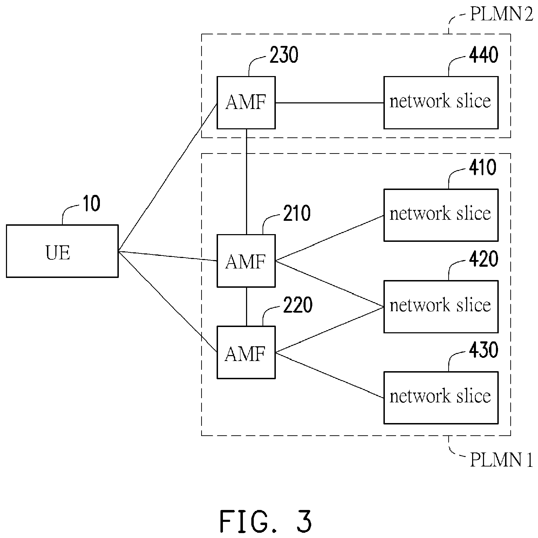

FIG. 3 is a schematic view showing switching of network slice subsets used by the user equipment 10 according to an embodiment of the disclosure. As shown in FIG. 3, it is assumed that the user equipment 10 is using a network slice 410 and a network slice 420 managed by the serving AMF 210. When the user equipment 10 intends to use a network slice 440 instead, the user equipment 10 may transmit an S-NSSAI corresponding to the network slice 440 to the serving AMF 210 to instruct the serving AMF 210 to provide the network slice 440 to the user equipment 10. However, the serving AMF 210 does not support the network slice 440. To provide the network slice 440 to the user equipment 10, the serving AMF 210 transmits the UE mobility context associated with the user equipment 10 to an AMF 230 which is capable of providing the network slice 440 to the user equipment 10. Then, the user equipment 10 terminates or releases the PDU session with the serving AMF 210 and establishes a PDU session with the AMF 230. In an embodiment, the procedure for establishing the PDU session is implemented according to, for example, the PDU session establishment procedure recited in 3GPP TS 23.501 and TS 23.502 (especially under "4.3.2.2 UE Requested PDU Session Establishment" of TS 23.502).

On the other hand, assuming again that the user equipment 10 is using the network slice 410 and the network slice 420 managed by the serving AMF 210, when the user equipment 10 intends to use the network slice 420 and the network slice 430 instead, the user equipment 10 may transmit multiple S-NSSAIs respectively corresponding to the network slice 420 and the network slice 430 to the serving AMF 210 to instruct the serving AMF 210 to provide the network slice 420 and the network slice 430 to the user equipment 10. However, the serving AMF 210 does not support the network slice 430. To provide the network slice 420 and the network slice 430 to the user equipment 10 at the same time, the serving AMF 210 transmits the UE mobility context and the UE session related parameters associated with the user equipment 10 to the AMF 220 which is capable of simultaneously providing the network slice 420 and the network slice 430 to the user equipment 10. Then, the user equipment 10 terminates or releases the PDU session with the serving AMF 210 and establishes a PDU session with the AMF 220.

In an embodiment, if the network slice 420 which the user equipment 10 is using is communicatively connected to the AMF 210 and the AMF 220 (i.e., the AMF 210 and the AMF 220 can both access the network slice 420), when the serving AMF accessed by the user equipment 10 is switched from the AMF 210 to the AMF 220, the continuity of the session between the user equipment 10 and the network slice 420 may be maintained. In other words, the session between the user equipment 10 and the network slice 420 is not interrupted as a result of the serving AMF being switched.

In an embodiment, the network slices requested by the user equipment 10 from the serving AMF 210 may respectively correspond to different AMFs. For example, the user equipment 10 may transmit S-NSSAIs respectively corresponding to the network slice 410 and the network slice 440 to the serving AMF 210. Since the serving AMF 210 does not support the network slice 440, the serving AMF 210 transmits the UE mobility context associated with the user equipment 10 to the AMF 230 which is capable of providing the network slice 440, and notifies the user equipment 10 to establish a PDU session with the AMF 230 to access the network slice 440. Accordingly, the user equipment 10 respectively establishes a PDU session with the serving AMF 210 and a PDU session with the serving AMF 230 to respectively access the network slice 410 and the network slice 440.

In an embodiment, the network slices requested by the user equipment 10 from the serving AMF 210 may respectively correspond to different public land mobile networks. For example, the user equipment 10 may simultaneously establish a PDU session between the user equipment 10 and the serving AMF 210 and a PDU session between the user equipment 10 and the serving AMF 230 to simultaneously access the network slice 410 and the network slice 440, and the serving AMF 210 and the serving AMF 230 may respectively correspond to different public land mobile networks. Specifically, the serving AMF 210 may correspond to a PLMN 1 which is the home public land mobile network (HPLMN) of the user equipment 10, and the AMF 230 may correspond to a PLMN 2 different from the PLMN 1.

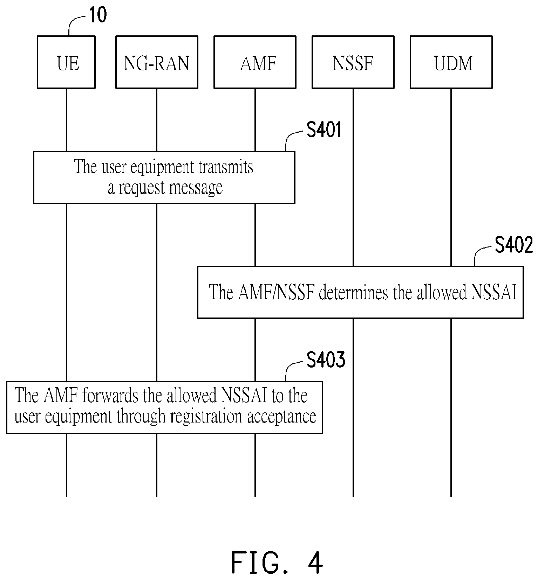

FIG. 4 is a schematic view showing a registration procedure of the user equipment 10 according to an embodiment of the disclosure. The user equipment 10 may obtain allowed NSSAI for initiating the PDU session establishment procedure through completing the registration procedure. In step S401, the user equipment 10 transmits a request message to the 5G communication network. Specifically, the user equipment 10 transmits the request message to the 5G communication network in an access stratum (AS) or a non-access stratum (NAS), so that the AMF in the 5G core network receives the request message transmitted from the user equipment 10 through the NG-RAN, and the request message includes required NSSAI. More specifically, after the user equipment transmits the request message to the NG-RAN in the access stratum or the non-access stratum, the NG-RAN may select the serving AMF according to the received request message and supplementary information such as the 5G system temporary mobile subscription identifier (5G-S-TMSI) and the globally unique AMF identifier (GUAMI). The required NSSAI includes one or more required S-NSSAIs, and each of the required S-NSSAI corresponds to one network slice to be accessed by the user equipment 10. It is noted that, in an embodiment, the multiple required S-NSSAIs transmitted by the user equipment 10 may correspond to the same or different AMFs. In another embodiment, the multiple required S-NSSAIs transmitted by the user equipment 10 may correspond to the same or different public land mobile networks.

In addition, the required NSSAI may be selected from pre-stored NSSAI in the user equipment 10, and the pre-stored NSSAI includes one or more pre-stored S-NSSAIs including pre-configured NSSAI or previously allowed NSSAI. The pre-stored NSSAI is obtained, for example, by configuration/allocation of the public land mobile network (or the home public land mobile network of the user equipment 10), and the multiple pre-stored S-NSSAIs in the pre-stored NSSAI may correspond to the same or different AMFs, or may correspond to the same or different public land mobile networks.

The pre-configured NSSAI may include one or more S-NSSAIs configured by a serving PLMN (SPLMN) (e.g., a visited PLMN in a roaming scenario) to the user equipment 10. The previously allowed NSSAI may include one or more S-NSSAIs allocated by the serving AMF in the SPLMN to the user equipment 10 in response to a request message (a request message similar to the request message shown in step S401) transmitted by the user equipment 10 in the past. In other words, if the user equipment 10 has completed a specific procedure same with or similar to the registration procedure shown in FIG. 4 (or the UE configuration update procedure recited in "4.2.4 UE Configuration Update" of TS 23.502), the user equipment 10 may store the previously allowed NSSAI obtained in response to completion of the specific procedure.

After completing step S401, the user equipment 10 receives the allowed NSSAI from the 5G communication network in response to the request message. The allowed NSSAI includes one or more allowed S-NSSAIs, and each allowed S-NSSAI corresponds to one network slice (or referred to as an allow network slice) which the 5G core network allows the user equipment 10 to access. In an embodiment, the one or more allowed S-NSSAIs in the allowed NSSAI are, for example, a subset of one or more required S-NSSAIs in the required NSSAI. In other words, the number of network slices that the 5G core network agrees the user equipment 10 to access may be less than the number of network slices requested by the user equipment 10.

More specifically, in step S402, the AMF determines the allowed NSSAI for the user equipment 10. In an embodiment, the AMF may retrieve subscribed S-NSSAI corresponding to the user equipment 10 from a unified data management (UDM) in the 5G core network, and determines whether the 5G core network allows the user equipment 10 to access the network slice corresponding to the required S-NSSAI in the request message through comparing the subscribed S-NSSAI. The subscribed S-NSSAI is a subscribed material of the user equipment stored in the UDM according to a UE service level agreement (SLA) with a network operator or a service provider. In another embodiment, after the AMF retrieves the subscribed S-NSSAI corresponding to the user equipment 10 from the UDM, the AMF may query a network slice selection function (NSSF) by using the required NSSAI, the subscribed S-NSSAI, and other necessary information corresponding to the user equipment 10, so as to determine whether the required NSSAI is the allowed NSSAI.

In addition, the AMF may further include mutually exclusive network slices information in the allowed NSSAI, and the mutually exclusive network slices information is used to indicate whether the network slices are mutually exclusive. For example, the mutually exclusive network slices information may be used to indicate that a first network slice and a second network slice are mutually exclusive (i.e., the user equipment 10 cannot use the first network slice and the second network slice at the same time). The AMF may receive a request transmitted by, for example, an application function provided by a service provider from the 5G communication network to obtain the mutually exclusive network slices information, but the disclosure is not limited thereto.

In step S403, after determining the allowed NSSAI of the user equipment 10, the AMF forwards (e.g., through registration acceptance) the allowed NSSAI to the user equipment 10.

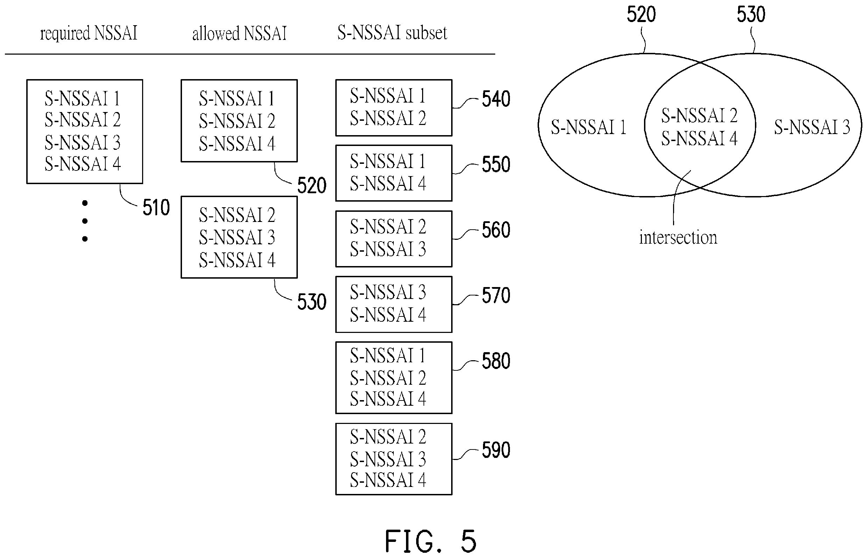

After the user equipment 10 receives the allowed NSSAI forwarded by the AMF from the 5G communication network, the user equipment 10 may obtain the mutually exclusive network slices information according to the allowed NSSAI. FIG. 5 is a schematic view showing acquisition of the mutually exclusive network slices information by the user equipment 10 according to an embodiment of the disclosure. The user equipment 10 may obtain the allowed NSSAI from the AMF through transmitting the required NSSAI to the 5G communication network. For example, it is assumed that twenty S-NSSAIs, including S-NSSAI 1 to S-NSSAI 20, are pre-stored in the user equipment 10 as the pre-stored NSSAI. When the user equipment 10 intends to use four network slices respectively corresponding to the S-NSSAI 1, the S-NSSAI 2, the S-NSSAI 3, and the S-NSSAI 4, the user equipment 10 may transmit required NSSAI 510 associated with the S-NSSAI 1, the S-NSSAI 2, the S-NSSAI 3, and the S-NSSAI 4 to the AMF of the 5G core network, so as to query the AMF whether the S-NSSAI 1, the S-NSSAI 2, the S-NSSAI 3, and the S-NSSAI 4 can be used by the user equipment 10. It is noted that one single required NSSAI may include up to eight S-NSSAIs.

After the AMF receives the required NSSAI 510 from the user equipment 10, the AMF may determine whether the multiple S-NSSAIs in the required NSSAI 510 can be used by the user equipment 10, and determine whether the multiple S-NSSAIs are mutually exclusive. Next, the AMF may forward the allowed NSSAI corresponding to the required NSSAI 510 to the user equipment 10, and the allowed NSSAI includes, for example, information about the multiple network slices that the 5G core network allows the user equipment 10 to access and information about mutual exclusivity among the multiple network slices.

In the present embodiment, it is assumed that the AMF determines that the four network slices corresponding to the S-NSSAI 1, the S-NSSAI 2, the S-NSSAI 3, and the S-NSSAI 4 can all be used by the user equipment 10, but the disclosure is not limited thereto. For example, the allowed NSSAI may include a subset of the S-NSSAIs in the required NSSAI 510. For example, if the AMF determines that the network slice corresponding to the S-NSSAI 4 cannot be used by the user equipment 10, the allowed NSSAI forwarded by the AMF to the user equipment 10 will not include the S-NSSAI 4, but will only include a subset of the S-NSSAI 1, the S-NSSAI 2, and the S-NSSAI 3.

In an embodiment, it is assumed that the network slice corresponding to the S-NSSAI 1 and the network slice corresponding to the S-NSSAI 3 are mutually exclusive. To notify the user equipment 10 that the network slice corresponding to the S-NSSAI 1 and the network slice corresponding to the S-NSSAI 3 are mutually exclusive, the AMF may associate the allowed NSSAI forwarded to the user equipment 10 with an S-NSSAI subset 520 including the S-NSSAI 1 and an S-NSSAI subset 530 including the S-NSSAI 3, and the S-NSSAI subset 520 is not the same as the S-NSSAI subset 530. In an embodiment, the S-NSSAI subset 520 further includes the allowed S-NSSAIs (the S-NSSAI 2 and the S-NSSAI 4 in the present embodiment) of each of all allowed network slices that are not mutually exclusive with the network slice corresponding to the S-NSSAI 1, and the S-NSSAI subset 530 further includes the allowed S-NSSAIs (the S-NSSAI 2 and the S-NSSAI 4 in the present embodiment) of each of all allowed network slices that are not mutually exclusive with the network slice corresponding to the S-NSSAI 3.

After the user equipment 10 receives the allowed NSSAI from the AMF, the user equipment 10 may obtain the S-NSSAI subset 520 and the S-NSSAI subset 530 according to the allowed NSSAI. The user equipment 10 may obtain the mutually exclusive network slices information according to the S-NSSAI subset 520 and the S-NSSAI subset 530. Specifically, the user equipment 10 may determine that the network slice corresponding to the S-NSSAI 1 and the network slice corresponding to the S-NSSAI 3 are mutually exclusive based on the S-NSSAI 1 and the S-NSSAI 3 not being in the intersection between the S-NSSAI subset 520 and the S-NSSAI subset 530. In an embodiment, the user equipment 10 may obtain the S-NSSAI subset 520 and the S-NSSAI subset 530 respectively from different AMFs (or different public land mobile networks). In other words, the user equipment 10 may obtain a portion of the allowed NSSAI from an AMF (or a public land mobile network) and obtain the remaining portion of the allowed NSSAI from another AMF (or another public land mobile network). In an embodiment, in addition to obtaining the S-NSSAI subset from the AMF (or the public land mobile network), the user equipment 10 may further obtain information of the public land mobile network corresponding to the S-NSSAI subset from the AMF (or the public land mobile network).

After the user equipment 10 obtains the mutually exclusive network slices information, the user equipment 10 may establish multiple PDU sessions respectively corresponding to multiple network slices according to the mutually exclusive network slices information, and the multiple network slices are not mutually exclusive. Specifically, the user equipment 10 may obtain the S-NSSAI 1, the S-NSSAI 2, the S-NSSAI 3, and the S-NSSAI 4 as indicated by the allowed NSSAI from the AMF according to the S-NSSAI subset 520 and the S-NSSAI subset 530. The user equipment 10 may learn that the multiple network slices respectively corresponding to the S-NSSAI 1, the S-NSSAI 2, the S-NSSAI 3, and the S-NSSAI 4 can be used by the user equipment 10, and that the network slice corresponding to the S-NSSAI 1 and the network slice corresponding to the S-NSSAI 3 are mutually exclusive. Accordingly, the user equipment 10 may generate one or more S-NSSAI subsets including the S-NSSAI 1, the S-NSSAI 2, the S-NSSAI 3, and the S-NSSAI 4, and each of the S-NSSAI subsets does not include mutually exclusive S-NSSAIs. In the present embodiment, the S-NSSAI subsets generated by the user equipment 10 include an S-NSSAI subset 540, an S-NSSAI subset 550, an S-NSSAI subset 560, an S-NSSAI subset 570, an S-NSSAI subset 580, and an S-NSSAI subset 590, but the disclosure is not limited thereto. In an embodiment, the allowed NSSAI received by the user equipment 10 further includes mapping information, and the mapping information indicates the user equipment 10 to generate S-NSSAI subsets including specific S-NSSAI combinations.

Next, the user equipment 10 may establish PDU sessions with the corresponding multiple network slices by using the multiple S-NSSAI subsets, and the multiple network slices may be subsets of the multiple network slices indicated by the allowed NSSAI (i.e., the multiple network slices respectively corresponding to the S-NSSAI 1, the S-NSSAI 2, the S-NSSAI 3, and the S-NSSAI 4). For example, the user equipment 10 may establish a PDU session between the user equipment 10 and the network slice corresponding to the S-NSSAI 1 and establish a PDU session between the user equipment 10 and the network slice corresponding to the S-NSSAI 2 by using the S-NSSAI subset 540.

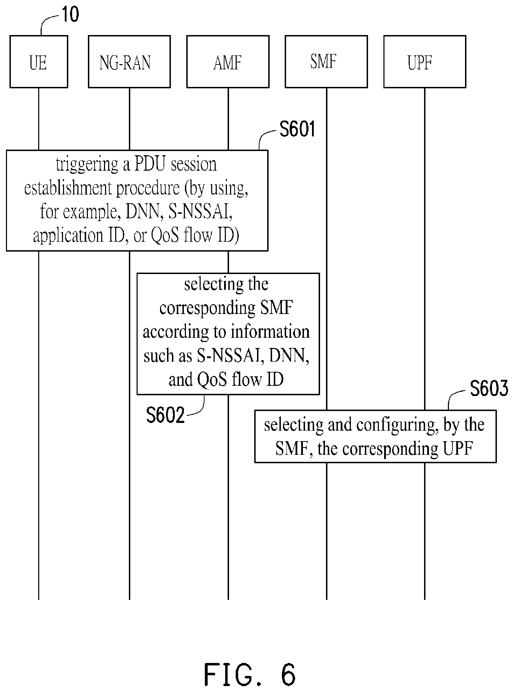

FIG. 6 is a schematic view showing a PDU session establishment procedure according to an embodiment of the disclosure. In step S601, the user equipment 10 triggers a PDU session establishment procedure by using information such as the S-NSSAI, the data network name (DNN), the application ID, or the QoS flow ID (QFI). The information such as the S-NSSAI, the data network name, and the QoS flow ID is used to assist the AMF in selecting the corresponding network slice, and the network slice includes an SMF and a UPF managed by the SMF. In step S602, the AMF selects the corresponding SMF according to the information such as the S-NSSAI, the data network name, and/or the QoS flow ID. After the SMF is selected, in step S603, the SMF selects and configures the UPF corresponding to the information such as the S-NSSAI, the data network name, and the QoS flow ID.

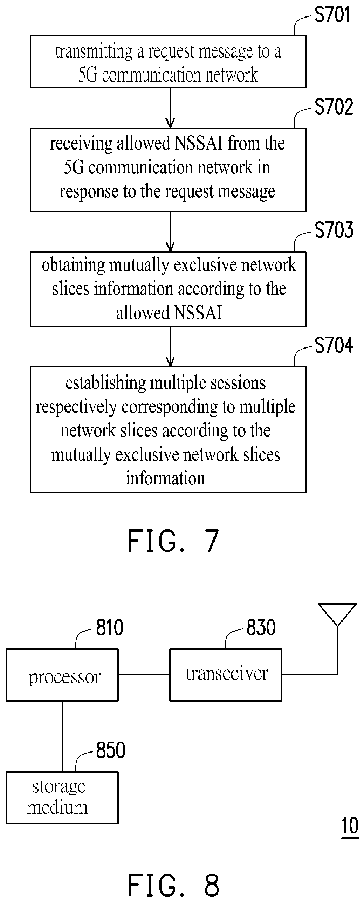

FIG. 7 is a flowchart showing a method for accessing a network slice according to an embodiment of the disclosure. The method is applicable to a user equipment supporting a 5G communication network. In step S701, a request message is transmitted to a 5G communication network. In step S702, allowed NSSAI is received from the 5G communication network in response to the request message. In step S703, mutually exclusive network slices information is obtained according to the allowed NSSAI. In step S704, multiple sessions respectively corresponding to multiple network slices are established according to the mutually exclusive network slices information.

FIG. 8 is a functional block diagram showing the user equipment 10 as shown in FIG. 1A to FIG. 6 according to an embodiment of the disclosure. The user equipment 10 supports a 5G communication network, and the user equipment 10 is at least configured to perform the method as shown in FIG. 7. The user equipment 10 includes a processor 810, a transceiver 830, and a storage medium 850, but the disclosure is not limited thereto.

The processor 810 is, for example, a central processing unit (CPU), another programmable general-purpose or specific-purpose microprocessor, digital signal processor (DSP), programmable controller, application-specific integrated circuit (ASIC), graphics processing unit (GPU), another similar device, or a combination of the above devices.

The transceiver 830 is coupled to the processor 810. The transceiver 830 may transmit uplink signals and receive downlink signals. The transceiver 830 may further perform operations such as low noise amplifying (LNA), impedance matching, frequency mixing, up or down frequency conversion, filtering, amplifying, and/or other similar operations. The transceiver 830 may further include an antenna array. The antenna array may include one or more antennas for transmitting and receiving omnidirectional antenna beams or directional antenna beams.

The storage medium 850 is coupled to the processor 810 and is, for example, a fixed or movable random access memory (RAM), read-only memory (ROM), flash memory, hard disk drive (HDD), solid state drive (SSD) in any form, a similar device, or a combination of the above devices. The storage medium 850 stores various modules or programs for the processor 810 to access, so that the processor 810 can execute various functions of the user equipment 10.

The processor 810 is at least configured to implement the method for accessing a network slice as shown in FIG. 7, and the method at least includes: transmitting, by the transceiver, a request message to a 5G communication network; receiving, by the transceiver, allowed NSSAI from the 5G communication network in response to the request message; obtaining mutually exclusive network slices information according to the allowed NSSAI; and establishing multiple sessions respectively corresponding to multiple network slices according to the mutually exclusive network slices information.

In summary of the above, the user equipment of the disclosure may receive the allowed NSSAI associated with multiple network slice subsets from the AMF in the 5G core network. The user equipment may obtain mutually exclusive network slices information according to the allowed NSSAI to determine whether the network slices are mutually exclusive. Accordingly, when the user equipment intends to transmit a PDU session establishment request to establish multiple sessions respectively corresponding to multiple network slices, the user equipment can request to use mutually exclusive network slices from the 5G core network not at the same time. Therefore, the AMF in the 5G core network will not need to respond to the user equipment through a message to notify the user equipment that the requested network slices are mutually exclusive. Accordingly, the signaling overhead can be significantly reduced.

## Claims

1. A method for accessing a network slice, which is adapted for a user equipment (10) supporting a fifth generation communication network, and **characterized in that** the method comprising:
transmitting (S401, S701) a request message to the fifth generation communication network;
receiving (S403, S702) allowed network slice selection assistance information (NSSAI) from the fifth generation communication network in response to the request message;
obtaining (S703) mutually exclusive network slices information according to the allowed NSSAI (520, 530); and
establishing (S704) multiple sessions respectively corresponding to multiple network slices (310, 320, 410, 420, 430, 440) according to the mutually exclusive network slices information.

2. The method for accessing a network slice according to claim 1, wherein the mutually exclusive network slices information indicates that a first network slice and a second network slice are mutually exclusive.

3. The method for accessing a network slice according to claim 1, wherein the allowed NSSAI is associated with a first single network slice selection assistance information (S-NSSAI) subset (520) comprising a first S-NSSAI and a second S-NSSAI subset (530) comprising a second S-NSSAI, wherein the first S-NSSAI corresponds to a first network slice, the second S-NSSAI corresponds to a second network slice, and the first S-NSSAI subset (520) is different from the second S-NSSAI subset (530).

4. The method for accessing a network slice according to claim 3, wherein the step of obtaining (S703) the mutually exclusive network slices information according to the allowed NSSAI comprises:
determining that the first network slice and the second network slice are mutually exclusive based on the first S-NSSAI and the second S-NSSAI not being in an intersection between the first S-NSSAI subset (520) and the second S-NSSAI subset (530).

5. The method for accessing a network slice according to claim 3, wherein the first S-NSSAI subset (520) further comprises allowed S-NSSAI of each of all allowed network slices that are not mutually exclusive with the first network slice, and the second S-NSSAI subset (530) further comprises allowed S-NSSAI of each of all allowed network slices that are not mutually exclusive with the second network slice.

6. The method for accessing a network slice according to claim 1, wherein the multiple network slices (310, 320, 410, 420, 430, 440) are not mutually exclusive.

7. The method for accessing a network slice according to claim 1, wherein the multiple network slices (310, 320, 410, 420, 430, 440) respectively correspond to different access and mobility management functions (210, 220, 230) or different public land mobile networks, wherein the multiple network slices (310, 320, 410, 420, 430, 440) comprise a subset of multiple network slices (520, 530) indicated by the allowed NSSAI.

8. The method for accessing a network slice according to claim 1, wherein the request message is associated with pre-stored NSSAI stored in the user equipment, and the pre-stored NSSAI is configured by a public land mobile network.

9. The method for accessing a network slice according to claim 1, wherein the multiple network slices (310, 320, 410, 420, 430, 440) comprise a first network slice (420), and the first network slice (420) is communicatively connected to a first access and mobility management function (210) and a second access and mobility management function (220), wherein a session between the user equipment (10) and the first network slice (420) remains uninterrupted when an access and mobility management function accessed by the user equipment (10) is switched from the first access and mobility management function (210) to the second access and mobility management function (220).

10. A user equipment (10), which supports a fifth generation communication network, and **characterized in that** the user equipment comprising:
a transceiver (830); and
a processor (810), coupled to the transceiver, the processor being configured at least to:
transmit, by the transceiver (830), a request message to the fifth generation communication network;
receive, by the transceiver (830), allowed NSSAI from the fifth generation communication network in response to the request message;
obtain mutually exclusive network slices information according to the allowed NSSAI; and
establish multiple sessions respectively corresponding to multiple network slices (310, 320, 410, 420, 430, 440) according to the mutually exclusive network slices information.

11. The user equipment (10) according to claim 10, wherein the mutually exclusive network slices information indicates that a first network slice and a second network slice are mutually exclusive.

12. The user equipment (10) according to claim 10, wherein the allowed NSSAI is associated with a first S-NSSAI subset (520) comprising a first S-NSSAI and a second S-NSSAI subset (530) comprising a second S-NSSAI, wherein the first S-NSSAI corresponds to a first network slice, the second S-NSSAI corresponds to a second network slice, and the first S-NSSAI subset (520) is different from the second S-NSSAI subset (530).

13. The user equipment (10) according to claim 12, wherein the processor (810) is further configured to:
determine that the first network slice and the second network slice are mutually exclusive based on the first S-NSSAI and the second S-NSSAI not being in an intersection between the first S-NSSAI subset (520) and the second S-NSSAI subset (530).

14. The user equipment (10) according to claim 12, wherein the first S-NSSAI subset (520) further comprises allowed S-NSSAI of each of all allowed network slices that are not mutually exclusive with the first network slice, and the second S-NSSAI subset (530) further comprises allowed S-NSSAI of each of all allowed network slices that are not mutually exclusive with the second network slice.

15. The user equipment (10) according to claim 10, wherein the multiple network slices (310, 320, 410, 420, 430, 440) are not mutually exclusive.

16. The user equipment (10) according to claim 10, wherein the multiple network slices (310, 320, 410, 420, 430, 440) respectively correspond to different access and mobility management functions (210, 220, 230) or different public land mobile networks, wherein the multiple network slices (310, 320, 410, 420, 430, 440) comprise a subset of multiple network slices (520, 530) indicated by the allowed NSSAI.

17. The user equipment (10) according to claim 10, wherein the request message is associated with pre-stored NSSAI stored in the user equipment, and the pre-stored NSSAI is configured by a public land mobile network.

18. The user equipment (10) according to claim 10, wherein the multiple network slices (310, 320, 410, 420, 430, 440) comprise a first network slice (420), and the first network slice is communicatively connected to a first access and mobility management function (210) and a second access and mobility management function (220), wherein a session between the user equipment (10) and the first network slice (420) remains uninterrupted when an access and mobility management function accessed by the user equipment (10) is switched from the first access and mobility management function (210) to the second access and mobility management function (220).
